(19) Europäisches Patentamt
European Patent Office
Office européen des brevets

(11) **EP 4 250 742 A1**

(12) **EUROPEAN PATENT APPLICATION**
published in accordance with Art. 153(4) EPC

(43) Date of publication:
**27.09.2023 Bulletin 2023/39**

(21) Application number: **21893825.6**

(22) Date of filing: **12.11.2021**

(51) International Patent Classification (IPC):
*H04N 19/88* (2014.01)    *H04N 19/176* (2014.01)

(52) Cooperative Patent Classification (CPC):
**H04N 19/126; H04N 19/157; H04N 19/176**

(86) International application number:
**PCT/CN2021/130206**

(87) International publication number:
**WO 2022/105678 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.11.2020 CN 202011286559**

(71) Applicant: **Tencent Technology (Shenzhen) Company Limited**
**Shenzhen, Guangdong, 518057 (CN)**

(72) Inventor: **WANG, Liqiang**
**Shenzhen, Guangdong 518057 (CN)**

(74) Representative: **Eisenführ Speiser Patentanwälte Rechtsanwälte PartGmbB**
**Postfach 31 02 60**
**80102 München (DE)**

(54) **VIDEO DECODING METHOD, VIDEO ENCODING METHOD, AND RELATED APPARATUS**

(57)    Provided in the embodiments of the present invention are a video decoding method, a video encoding method, and a related apparatus. The video decoding method comprises: performing entropy decoding processing on a coding block of a video image frame to acquire a quantisation coefficient block of residual data corresponding to the coding block; performing inverse quantisation processing on the quantisation coefficient block to obtain an inverse quantisation coefficient matrix; performing inverse rearrangement processing on the inverse quantisation coefficient matrix to obtain a processed coefficient matrix, the nonzero coefficients in the processed coefficient matrix being concentrated in the left, upper, and upper left regions of the coefficient matrix; and, on the basis of the processed coefficient matrix, generating the residual data. The technical solution provided in the embodiments of the present invention can effectively increase video encoding efficiency.

Entropy-decode an encoded block of a video frame to obtain a quantized coefficient block for a residual corresponding to the encoded block — S610

Dequantize the quantized coefficient block to obtain a dequantized coefficient matrix — S620

Process the dequantized coefficient matrix through inverse rearrangement to obtain processed coefficient matrix — S630

Generate the residual according to the processed coefficient matrix — S640

Figure 6

**Description**

This application claims priority to Chinese Patent Application No. 202011286559.7, entitled "METHOD AND APPARATUS FOR VIDEO DECODING, AND ELECTRONIC DEVICE" and filed with the China National Intellectual Property Administration on November 17, 2020, which is incorporated herein by reference in its entirety.

FIELD OF THE TECHNOLOGY

The present disclosure relates to the technical field of computers and communications, and in particular, to video coding and video decoding.

BACKGROUND OF THE APPLICATION

During video coding, an encoding side usually is required to process a residue between original video data and predicted video data through transform, quantization, and entropy-coding, and then transmits the processed residual to a decoding side. Some residual has inner-correlation, hence may skip the transform.

A coefficient coding module operates more efficiently when coding a coefficient matrix in which non-zero coefficients are concentrated at an upper-left corner. The coefficients after the transform or skipping the transform do not always meet such requirement of the coefficient coding module.

Residuals which skip the transform are taken as an example. The transform on the residuals are directly skipped in the current skipping manner specified in the 3rd generation audio and video encoding and decoding standard (AVS3), and residual energy at a bottom-right corner of a residual block is higher due to a characteristic of intra prediction. Hence, it is difficult to reduce a dimension of a scan region coefficient coding (SRCC) region when the coefficients are directly coded, which reduces efficiency of the SRCC and thereby affects efficiency of the video coding.

SUMMARY

A method for video decoding, a method for video encoding, and related apparatuses are provided according to embodiments of the present disclosure. Efficiency of video coding efficiency is improved to some extent.

Other features and advantages of the present disclosure become obvious through following detailed description, or may be partially learned through practicing embodiments of the present disclosure.

In an aspect, a method for video decoding is provided according to embodiments of the present disclosure. The method is executable by a device having a function of computing and processing, and comprises: entropy-decoding an encoded block of a video frame to obtain a quantized coefficient block for a residual corresponding to the encoded block; dequantizing the quantized coefficient block to obtain a dequantized coefficient matrix; processing the dequantized coefficient matrix through inverse rearrangement to obtain processed coefficient matrix, where non-zero coefficients in the processed coefficient matrix are concentrated in left, upper and upper-left regions of the coefficient matrix; and generating the residual according to the processed coefficient matrix.

In another aspect, a method for video encoding is provided according to embodiments of the present disclosure. The method is executable by a device having a function of computing and processing, and comprises: calculating a difference between an original image signal and a predicted image signal which correspond to an encoded block to obtain a residual corresponding to the encoded block; obtaining a to-be-quantized coefficient matrix corresponding to the residual according to the residual; processing the to-be-quantized coefficient matrix through rearrangement to obtain a processed coefficient matrix, where non-zero coefficients in the processed coefficient matrix are concentrated in left, upper and upper-left regions of the coefficient matrix; quantizing the processed coefficient matrix to obtain a quantized coefficient block of the residual; and entropy-coding quantized coefficients in the quantized coefficient block to obtain an encoded video bitstream.

In another aspect, an apparatus for video decoding is provided. The apparatus is deployed on a device having a function of computing and processing, and comprises: a decoding unit, configured to entropy-decode an encoded block of a video frame to obtain a quantized coefficient block for a residual corresponding to the encoded block; a first processing unit, configured to dequantize the quantized coefficient block to obtain a dequantized coefficient matrix; a second processing unit, configured to process the dequantized coefficient matrix through inverse rearrangement to obtain processed coefficient matrix, where non-zero coefficients in the processed coefficient matrix are concentrated in left, upper and upper-left regions of the coefficient matrix; and a second processing unit, configured to generate the residual according to the processed coefficient matrix.

In another aspect, an apparatus for video encoding is provided. The apparatus is deployed on a device having a function of computing and processing, and comprises: co.

In another embodiment, a computer-readable medium is provided according to embodiments of the present disclosure. The computer-readable medium stores a computer program, where the computer program when executed by a processor implements the foregoing method for video decoding or the foregoing method for video encoding.

In another aspect, an electronic device is provided according to embodiments of the present disclosure. The electronic device comprises: one or more processors, and a storage apparatus configured to store one or more programs, where the one or more programs when executed by the one or more processors cause the one or more processors to implement the foregoing method for video decoding or the foregoing method for video encoding.

In another aspect, a computer program product or a computer program is provided according to embodiments of the present disclosure. The computer program product or the computer program comprises computer instructions, where the computer instructions is stored in a computer-readable storage medium, and a processor of a computer device reads the computer instructions from the computer-readable storage medium and executes the computer instructions to cause the computer device to implement the foregoing method for video decoding or the foregoing method for video encoding.

According to embodiments of the present disclosure, the dequantized coefficient matrix is processed through the inverse rearrangement, and then the residual is generated according to the processed coefficient matrix. The inverse rearrangement on the dequantized coefficient means that the non-zero coefficients in the dequantized coefficient matrix are more concentrated in the left, upper and upper-left regions of the coefficient matrix. Hence, a dimension of an SRCC region can be reduced during coding, which improving efficiency of video coding effectively.

The foregoing generic description and following detailed description are merely exemplary and illustrative, and are not intended for limiting the present disclosure.

BRIEF DESCRIPTION OF THE DRAWINGS

Figure 1 shows a schematic architectural diagram of an exemplary system to which a technical solution according to an embodiment of the present disclosure is applicable.

Figure 2 shows a schematic diagram of placement of apparatuses for video encoding and for video decoding in a streaming system.

Figure 3 shows a basic flowchart for a video encoder.

Figure 4 shows a scan region identified through SRCC technology.

Figure 5 shows a schematic diagram of a sequence of scanning in an identified scan region.

Figure 6 shows a flowchart of a method for video decoding according to an embodiment of the present disclosure.

Figures 7A to 7C show schematic diagrams of rotating a dequantized coefficient matrix according to embodiments of the present disclosure.

Figures 8A to 8D show schematic diagrams of flipping a dequantized coefficient matrix according to embodiments of the present disclosure.

Figure 9 shows a schematic diagram of prediction directions in a mode of intra prediction.

Figure 10 shows a schematic diagram of performing flipping and rearrangement on a dequantized coefficient matrix according to an embodiment of the present disclosure.

Figure 11 shows a schematic diagram of performing flipping and rearrangement on a dequantized coefficient matrix according to another embodiment of the present disclosure.

Figure 12 shows a block diagram of an apparatus for video decoding according to an embodiment of the present disclosure.

Figure 13 is a schematic structural diagram of a computer system suitable for implementing an electronic device according to an embodiment of the present disclosure.

DESCRIPTION OF EMBODIMENTS

Exemplary implementations are now described more comprehensively with reference to the drawings. Embodiments may be implemented in various forms, and should not be construed as being limited to examples described herein. Rather, these examples render the present disclosure more comprehensive and complete, and convey a concept of embodiments thoroughly to those skilled in the art.

In addition, features, structures, or characteristics that are described may be combined in one or more embodiments in any appropriate manner. Following description provide more specific details to facilitate comprehensive understanding of embodiments of the present disclosure. Those skilled in the art will be aware that technical solutions in the present disclosure may be implemented without one or more specific details, or with another method, unit, apparatus, system, or step. In other cases, conventional methods, apparatuses, systems, implementations, or operations are not shown or described in detail to avoid obscuring aspects of the present disclosure.

The block diagrams as shown in the drawings are merely functional entities and do not necessarily correspond to physically independent entities. That is, the functional entities may be implemented as software, or in at least one hardware module or integrated circuit, or in different networks and/or processor apparatuses and/or microcontroller apparatuses.

The flowcharts as shown in the drawings are merely exemplary description, do not necessarily comprise all content and operations/steps, and do not necessarily be performed in an order as described. For example, some operations/steps may be further divided, while some operations/steps may be combined or partially combined. Therefore, an actual execution order may change according to an actual situation.

Herein the term "multiple" mentioned herein refers to two or more, the term "and/or" describes association between associated objects and represents that three candidate relationships. For example, "A and/or B" may represent following three cases: only A exists, both A and B exist, and only B exists. Generally, the character "/" indicates an "or" relationship between the associated objects.

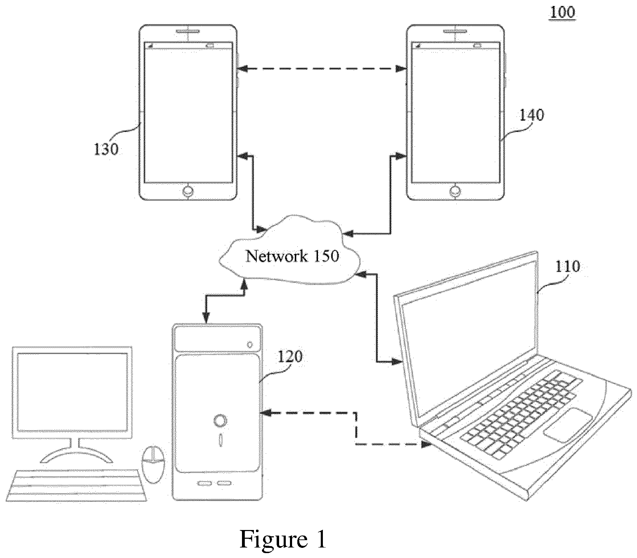

Figure 1 is a schematic architectural diagram of an exemplary system to which a technical solution according to an embodiment of the present disclosure is applicable.

As shown in Figure 1, the communication system 100 comprises multiple terminal devices that can communicate with each other, via, for example, a network 150. For example, the communication system 100 comprises a first pair of terminal devices 110 and 120 interconnected via the network 150. In the embodiment as shown in Figure 1, the first pair of terminal devices 110 and 120 may perform unidirectional transmission of data.

For example, the terminal device 110 may code video data (e.g., of a stream of video pictures that are captured by the terminal device 110) for transmission to the other terminal device 120 via the network 150. The encoded video data can be transmitted in the form of one or more coded video bitstreams. The terminal device 120 may receive the coded video data from the network 350, decode the coded video data to recover the video pictures and display the video pictures according to the recovered video data.

In an embodiment, the communication system 100 comprises a second pair of terminal devices 130 and 140 that perform bidirectional transmission of coded video data that may be implemented, for example, during a videoconferencing application. For bidirectional transmission of data, in an example, each terminal device of the terminal devices 130 and 140 may code video data (e.g., of a stream of video pictures that are captured by the terminal device) for transmission to the other terminal device of the terminal devices 130 and 1401 via the network 150. Each terminal device of the terminal devices 130 and 140 also may receive the coded video data transmitted by the other terminal device of the terminal devices 130 and 140, and may decode the coded video data to recover the video pictures and may display the video pictures at an accessible display device according to the recovered video data.

In the embodiment as shown in Figure 1, the terminal devices 110, 120, 130 and 140 may be implemented as servers, personal computers and smart phones but the applicability of the underlying principles of the present disclosure may not be so limited. Embodiments of the present disclosure may be implemented in desktop computers, laptop computers, tablet computers, media players, wearable computers, dedicated video conferencing equipment, and/or the like. The network 150 represents any number or types of networks that convey coded video data among the terminal devices 110, 120, 130 and 140, including for example wireline (wired) and/or wireless communication networks. The communication network 150 may exchange data in circuit-switched, packet-switched, and/or other types of channels. Representative networks include telecommunications networks, local area networks, wide area networks and/or the Internet. For the purposes of the present discussion, the architecture and topology of the network 150 may be immaterial to the operation of the present disclosure unless explicitly explained herein.

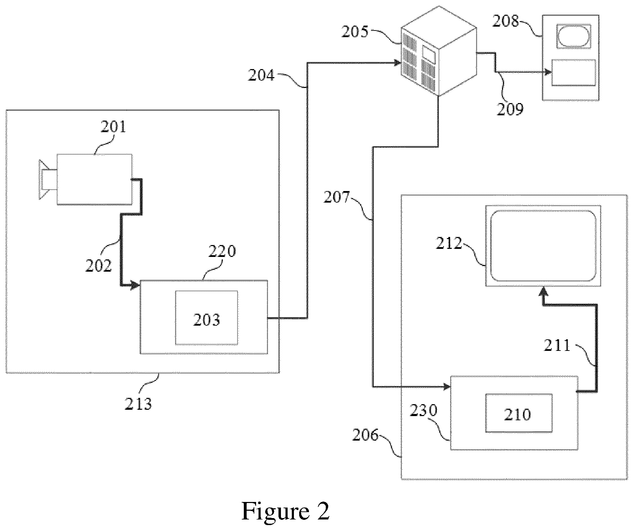

Figure 2 shows placement of apparatuses for video encoding and for video decoding in a streaming environment an embodiment of the present disclosure. The disclosed subject matter may be equally applicable to other video applications, including, for example, video conferencing, digital television (TV), storage of compressed video on digital media including CD, DVD, memory stick and the like, and so on.

A video streaming system may include a video capture subsystem 213 that can include a video source 201, e.g., a digital camera, for creating a stream of video pictures or images 202 that are uncompressed. In an embodiment, the stream of video pictures 202 includes samples that are recorded by a digital camera of the video source 201. The stream of video pictures 202, depicted as a bold line to emphasize a high data volume when compared to encoded video data 204 (or coded video bitstreams), can be processed by an electronic device 220 that includes a video encoder 203 coupled to the video source 201. The video encoder 203 can include hardware, software, or a combination thereof to enable or implement aspects of the disclosed subject matter as described in more detail below. The encoded video data 204)(or encoded video bitstream 204, depicted as a thin line to emphasize a lower data volume when compared to the stream of uncompressed video pictures 202, can be stored on a streaming server 205 for future use or directly to downstream video devices. One or more streaming client subsystems, such as client subsystems 206 and 208 in Figure 2 can access the streaming server 205 to retrieve copies 207 and 209 of the encoded video data 204. A client subsystem 206 can include a video decoder 210, for example, in an electronic device 230. The video decoder 210 decodes the incoming copy 207 of the encoded video data and creates an outgoing stream of video pictures 211 that are uncompressed and that can be rendered on a display 212 (e.g., a display screen) or other rendering devices. The video decoder 210 may be configured to perform some or all of the various functions described in this disclosure. In some streaming systems, the encoded video data 204, 207, and 209 (e.g., video bitstreams) can be encoded according to certain video coding/compression standards. Examples of those standards include ITU-T Recommendation H.265. In an example, a video coding standard under development is informally known as Versatile Video Coding (VVC). The disclosed subject matter may be used in the context of VVC, and other video coding standards.

The electronic devices 220 and 230 may include other components. For example, the electronic device 220 may include a video decoder and the electronic device 230 may include a video encoder as well.

In an embodiment, international video coding standards, i.e., high efficiency video coding (HEVC), versatile video coding (VVC) and a China national video coding standard AVS, are taken as examples. An input video frame is partitioned into several processing units, which do not overlap with each other, according to a size of a block. Each processing unit is subject to similar compression operation, and is called as a coding tree unit (CTU) or a largest coding unit (LCU). The CTU is further dividable and can be recursively partitioned into one or more basic coding units, each of which is called a coding unit (CU). The CU is the most basic element in coding. Hereinafter some concepts in coding a CU are introduced.

Predictive Coding. The predictive coding includes intra prediction, inter prediction, and the like. A residual video signal can be obtained through predicting the original video signal based on a reconstructed video signal which is selected. An encoding side needs to select the most suitable mode for the current CU among multiple candidate predictive coding modes, and inform a decoding side of the selected mode. The intra prediction refers to that the prediction signal is from an encoded, reconstructed region in the same image. The inter prediction refers to that the prediction signal is from an encoded image which is different from the current image (also called a reference image).

Transform & Quantization. The residual video signal is converted into a transform domain through the transform, such as discrete Fourier transform (DFT) and discrete cosine transform (DCT, a subset of DFT), which is represented transform coefficient(s). The signal in the transform domain is further subject to the lossy quantization, in which some information is missing, such that the quantized signal facilities compressing expression. In some video coding standards, there may be more than one candidate transform modes. Hence, an encoding side needs select one transform for the current CU and inform the decoding side of the selected transform. Fineness of the quantization is usually determined by a quantization parameter (QP). A larger QP indicates that a coefficient within a larger range would be quantized to the same output, and hence usually leads to greater distortion and a lower bitrate. Conversely, a smaller QP indicates that the coefficient within a smaller range would be quantized to the same output, and hence usually leads smaller distortion and an upper bitrate.

Entropy Coding or Statistical Coding. The quantized transform-domain signal is subject to statistical compression coding according to occurrence of each value, and finally a compressed binary (0 or 1) code stream is outputted. Meanwhile, other information generated due to the coding, such as a selected mode and a motion vector, is also subject to entropy coding to reduce a bitrate. The statistical coding is a lossless coding mode and can reduce a necessary bitrate for expressing the same signal effectively. Conventional statistical coding modes include variable length coding (VLC) and content adaptive binary arithmetic coding (CABAC).

Loop Filtering. An encoded image is subject to inverse quantization, inverse transformation, and prediction compensation (which are inverse operations of (2) to (4)) to obtain a reconstructed decoded image. Partial information in the reconstructed image is different form the corresponding information in the original image due to the quantization, which is distortion. The reconstructed image is subject to filtering, such as deblocking, sample adaptive offset (SAO), or adaptive loop filtering (ALF), and thereby a degree of the distortion can be effectively reduced. The reconstructed image after the filtering would serve as a reference for subsequent encoded images, i.e. are configured to predict future signals, and thus the filtering is also called loop filtering or filtering in a coding loop.

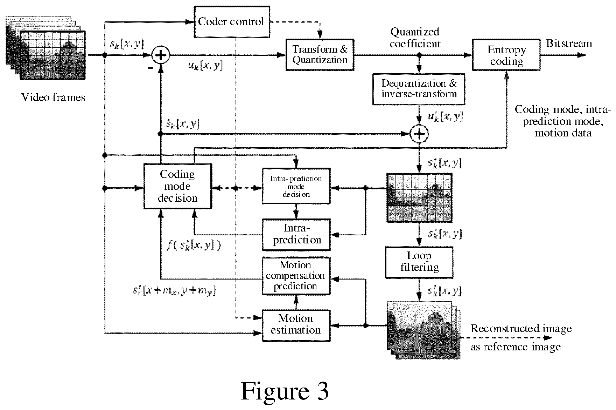

Figure 3 shows a basic flowchart of a video encoder according to an embodiment of the present disclosure.

Herein the intra prediction is taken as an example. A difference between an original image signal $s_k[x, y]$ and a predicted image signal $\hat{s}_k[x, y]$ is calculated to obtain a residual signal $u_k[x, y]$. The residual signal $u_k[x, y]$ is transformed and quantized to obtain quantized coefficients. In one aspect, the quantized coefficients are entropy-coded to obtain an coded bitstream (i.e., video bitstream) through. In another aspect, the quantized coefficients are dequantized and inverse-transformed to obtain a reconstructed residual signal $u'_k[x, y]$. The predicted image signal $\hat{s}_k[x, y]$ and the reconstructed residual signal $u'_k[x, y]$ are superimposed to generate an image signal $s_k^*[x, y]$. In one aspect, the image signal $s_k^*[x, y]$ is inputted into an intra-mode decision module and an intra prediction module for intra prediction. In another aspect, the image signal $s_k^*[x, y]$ is subject to loop filtering to output a reconstructed image signal $s'_k[x, y]$. The reconstructed image signal $s'_k[x, y]$ may serve as a reference image of a next frame for motion estimation and motion compensation prediction. Afterwards, a predicted image signal $\hat{s}_k[x, y]$ of a next frame is obtained based on a result $s'_r[x + m_x, y + m_y]$ of motion compensation prediction and a result $f(s_k^*[x, y])$ of the intra prediction. The above process is continuously repeated until encoding is completed.

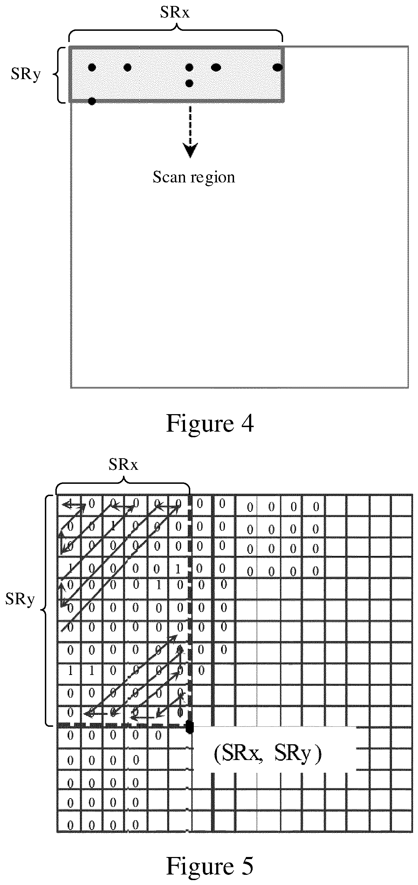

Furthermore, since a residual signal is transformed and quantized, non-zero coefficients in the quantized coefficient block are highly likely to concentrate in left and upper regions of such block, while right and bottom regions of such block are occupied by zeros. Thereby, the SRCC technique is introduced, where a dimension SRx×SRy of an upper-left region comprising the non-zero coefficients are identified from each quantized coefficient block (having a dimension of W×H). SRx is the abscissa of the rightmost non-zero coefficient in the quantized coefficient block, SRy is the ordinate of the lowermost non-zero coefficient in the quantized coefficient block, $1 \leq SRx \leq W$, and $1 \leq SRy \leq H$. Coefficients outside such region are all equal to zero. In the SRCC technique, (SRx, SRy) are used to determine a quantized coefficient region, which needs to be scanned, from the quantized coefficient block. As shown in Figure 4, only quantized coefficients in a scanning region denoted by (SRx, SRy) need to be encoded. A sequence of scanning in encoding is as shown in Figure 5, and may be in a zigzag manner from the bottom-right corner to the upper-left corner.

On a basis of the foregoing encoding, each CU is entropy-decoded at the decoding side after the decoding side obtains a compressed bitstream (i.e. a bit stream), so as to obtain various mode information and quantized coefficients. The, the quantized coefficients are dequantized and inverse-transformed to obtain a residual signal. On the other hand, a prediction signal corresponding to the CU may be obtained according to the obtained coding mode, and a reconstructed signal may be then obtained after superimposing the residual signal and the prediction signal. Afterwards, the reconstructed signal is subjected to loop filtering and other processing to generate a final output signal.

In the above codec process, the residual signal is transformed to concentrate power of the residual signal into few low-frequency components. That is, most of the coefficients are small. After subsequently processed by a quantization module, the small coefficients would become zero, which reduce a cost of encoding the residual signal significantly. Due to a diversity of residual distribution, a single DCT is not suitable for characteristics of all residuals. Hence, transform kernels such as DST7 and DCT8 are introduced into the transform, and different transform kernels may be used for horizontal transform and vertical transform, respectively, for the residual signal. The adaptive multiple core transform (AMT) is taken as an example. A transform combination for transforming a residual signal may be selected from: (DCT2, DCT2), (DCT8, DCT8), (DCT8, DST7), (DST7, DCT8), and (DST7, DST7).

It is necessary to determine which transform combination is selected for the residual signal at the encoding side based on rate-distortion optimization (RDO). Some residuals have weak inner-correlation, and hence may skip the transform. The residuals skipping the transform are taken as an example. A current manner of transform skipping in the AVS3 is skipping the residual transform directly, and there is high power at a bottom-right corner of the residual block due to a characteristic of the intra prediction. Hence, it is difficult to reduce the dimension of the SRCC region when coding the coefficients directly, which reduces efficiency of the SRCC and thereby affects efficiency of the video coding.

In view of the above issue, a dequantized coefficient matrix is subject to inverse rearrangement according to embodiments of the present disclosure. Non-zero coefficients in the dequantized coefficient matrix are more concentrated in left, upper and upper-left regions of the coefficient matrix. Thus, the area of an SRCC region can be reduced during coding, thereby effectively improving the video coding efficiency.

Hereinafter implementation of technical solutions of the present disclosure is illustrated in detail.

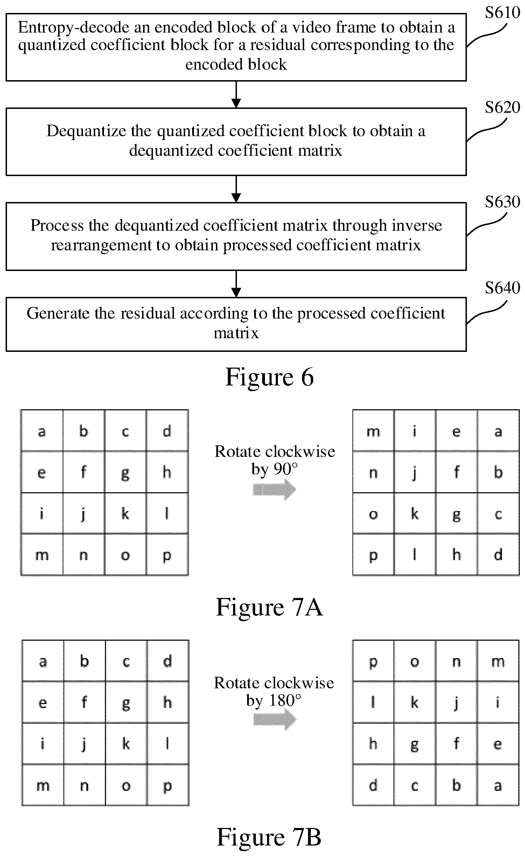

Figure 6 shows a flowchart of a method for video decoding according to an embodiment of the present disclosure. The method for video decoding is executable by a device having a function of computing and processing, such as a terminal device or a server. As shown in Figure 6, the method for video decoding comprises at least steps S610 to S640, details of which are as follows.

In step S610, an encoded block of a video frame is entropy-decoded to obtain a quantized coefficient block for a residual corresponding to the encoded block.

In an embodiment, a sequence of video frames comprises a series of images. Each image may be further divided into slices, and each slice may be divided into a series of LCUs (or CTUs). The LCU comprises multiple CUs. Each image may be called a video frame. The video picture frame is encoded in units of blocks in an encoding process. Some new video coding standards, such as H.264, provides a macroblock (MB), which may be further divided into multiple prediction blocks for predictive coding. In the HEVC standard, various functional block units are defined, where the basic concepts are CUs, prediction units (PU), and transform units (TU), and are described by suing a novel tree structure. For example, the CU may be divided into smaller CUs based on a quadtree. The smaller CU may be further divided, and thereby the quadtree structure is formed. Herein the encoded block may refer to the CU or a block smaller than CUs, for example, a small block obtained by dividing the CU.

In step S620, the quantized coefficient block is dequantized to obtain a dequantized coefficient matrix.

Dequantization is an inverse process of quantizing a video frame during encoding, and can obtain dequantized coefficient(s). For example, a manner of dequantization corresponds to a manner of quantization, and the dequantizaiton is based on the same step size used in the quantization.

In step S630, the dequantized coefficient matrix is processed through inverse rearrangement to obtain a processed coefficient matrix.

Non-zero coefficients in the processed coefficient matrix are concentrated in left, upper, and upper-left regions of the coefficient matrix.

In an embodiment, whether the obtained dequantized coefficient matrix of the corresponding encoded block needs to be processed through the inverse rearrangement may be determined based on at least one of: a value of an index identifier in a sequence header of the encoded block corresponding to a video frame sequence; a value of an index identifier c in an image header of the encoded block corresponding to a video frame; a coding mode applied to the encoded block; a dimension of the encoded block; a value of an index identifier in the encoded block; or implicit signaling of a result of statistics on coefficients in the quantized coefficient block.

Specifically, determining whether the obtained dequantized coefficient matrix of the corresponding encoded block needs to be processed through the inverse rearrangement may be performed in following manners.

In a first manner, it is signaled by the value of the index identifier in the sequence header, which is of the encoded block and corresponds to the video frame sequence. For example, the index identifier in the sequence header equal to 1 (where such value is merely exemplary) indicates that the obtained dequantized coefficient matrix needs to be processed through the inverse rearrangement for all encoded blocks corresponding to the video frame sequence.

In a second manner, it is signaled by the value of the index identifier in the image header, which is of an encoded block and corresponds to the video frame. For example, the index identifier in the image header equal to 1 (where such value is merely exemplary) indicates that the obtained dequantized coefficient matrix needs to be processed through the inverse rearrangement for all encoded blocks corresponding to the video frame.

In a third manner, it is signaled by the coding mode applied to the encoded block. For example, the encoded block applying intra-frame coding indicates that the obtained dequantized coefficient matrix needs to be processed through the inverse rearrangement for the encoded block.

In a fourth manner, it is signaled by the dimension of the encoded block. For example, the dimension of the encoded block being less than a set value indicates that the obtained dequantized coefficient matrix needs to be processed through the inverse rearrangement for the encoded block.

In a fifth manner, it is signaled by the value of the index identifier in the encoded block. For example, the index identifier in an encoded block equal to 1 (where such value is merely exemplary) indicates that the obtained dequantized coefficient matrix needs to be processed through the inverse rearrangement for the encoded block.

In a sixth manner, it is implicitly signaled by a result of statistics on coefficients in the quantized coefficient block. For example, non-zero coefficients, even coefficients, non-zero even coefficients, or odd coefficients may be counted in the quantized coefficient block, and whether the obtained dequantized coefficient matrix of the corresponding encoded block needs to be processed through the inverse rearrangement is implicitly indicated based on parity of the total quantity. The total quantity being an odd number indicates that the obtained dequantized coefficient matrix needs to be processed through the inverse rearrangement for the encoded block. On the contrary, the total quantity being an even number indicates that the obtained dequantized coefficient matrix does not need to be processed through the inverse rearrangement for the encoded block. It is appreciated that in another case, the total quantity being an odd number indicates that the obtained dequantized coefficient matrix does not need to be processed through the inverse rearrangement for the encoded block, and the total quantity being an even number indicates that the obtained dequantized coefficient matrix needs to be processed through the inverse rearrangement for the encoded block.

In an embodiment, when performing the statistics on the quantized coefficient block, the whole region or a partial region in the quantized coefficient block may be considered. Alternatively, the statistics may be performed on an SRCC region (for example, the whole SRCC regions or a part of the SRCC region) in the quantized coefficient block. For example, the statistics is performed on one or more positions specified in the quantized coefficient block, or performed on positions in at least one row, at least one column, at least one row and at least one column, at least one diagonal line, or the like, which is specified in the quantized coefficient block. In an implementation, the part of the SRCC region may refer to one or more positions specified in the SRCC region, or refer to positions in at least one row, at least one column, at least one row and at least one column, at least one diagonal line, or the like, which is specified in the SRCC region, etc.

In a seventh manner, it is signaled through two or more of the foregoing first to fifth manners.

For example, it may be jointly indicated by the value of the index identifier in the sequence header, the value of the index identifier in the image header, the coding mode applied to the encoded block, the dimension of the encoded block, and the value of the index identifier in an encoded block. When the index identifier in the sequence header is equal to 1 (where such value is merely exemplary), the value of the index identifier in the image header is equal to 1 (where such value is merely exemplary), the encoded block applies the intra-frame coding mode, and the dimension of the encoded block is smaller than a set dimension, the value of the index identifier in the encoded block equal to 1 (where such value is merely exemplary) indicates that the obtained dequantized coefficient matrix needs to be processed through the inverse rearrangement for the encoded block.

In the above example, when the index identifier in the sequence header is equal to 1 (where such value is merely exemplary), the index identifier in the image header is equal to 1 (where such value is merely exemplary), the encoded block applies the intra-frame coding mode, and the dimension of the encoded block is smaller than the set dimension, the value of the index identifier in the encoded block equal to 0 (where such value is merely exemplary) indicates that the obtained dequantized coefficient matrix for the encoded block does not need to be processed through the inverse rearrangement and may be inverse-transformed through the DCT.

In an eighth manner, it is signaled through two or more of the forgoing first to fourth, and sixth manners.

For example, it may be jointly indicated by the value of the index identifier in the sequence header, the value of the index identifier in the image header, the coding mode applied by the encoded block, the dimension size of the encoded block, and the result of statistics on the coefficients in the quantized coefficient block. In an embodiment, when the index identifier in the sequence header is equal to 1 (where such value is merely exemplary), the index identifier in the image header is equal to 1 (where such value is merely exemplary), the encoded block applies the intra-frame coding, and the dimension of the encoded block is less than a set dimension, the result of statistics on the quantized coefficient block corresponding to the encoded block having first parity (such as being odd, which is merely an example) indicates that the obtained dequantized coefficient matrix needs to be processed through the inverse rearrangement for the encoded block.

In the above example, when the index identifier in the sequence header is equal to 1 (where such value is merely exemplary), the index identifier in the image header is equal to 1 (where such value is merely exemplary), the encoded block applies the intra-frame coding, and the dimension of the encoded block is less than a set dimension, the result of statistics on the quantized coefficient block corresponding to the encoded block having second parity (such as being even, which is merely an example) indicates that the obtained dequantized coefficient matrix for the encoded block does not need to be processed through the inverse rearrangement and may be inverse-transformed through the DCT.

In a ninth manner, it is signaled through a combination of an explicit index identifier and a value of an implicitly derived index.

For example, statistics may be performed on quantized coefficients in the quantized coefficient block to obtain the implicitly derived index value. In a case that the explicit index identifier in the encoded block is equal to a first value (such as 0 or 1) and the implicitly derived index is equal to the first value (such as 0 or 1), it is determined that the encoded block needs to skip the inverse transform and its dequantized coefficient matrix needs to be processed through the inverse rearrangement. In a case that the explicit index identifier in the encoded block is equal to a first value (such as 0 or 1) and the implicitly derived index is equal to a second value, it is determined that the encoded block needs to skip the inverse transform and its dequantized coefficient matrix does not need to be processed through the inverse rearrangement. In a case that the explicit index identifier in the encoded block is equal to the second value, it is determined that the obtained dequantized coefficient matrix needs to be inverse-transformed through the DCT for the encoded block.

In the above example, when the explicit index identifier in the encoded block is equal to 0 and the implicitly derived index is equal 1 (where such values are merely exemplary), it is determined that the encoded block needs to skip the inverse transform and the obtained dequantized coefficient matrix needs to be processed through the inverse rearrangement. When the explicit index identifier in the encoded block is equal to 0 and the implicitly derived index is equal 0, it is determined that the encoded block needs to skip the inverse transform and the obtained dequantized coefficient matrix does not need to be processed through the inverse rearrangement. When the explicit index identifier in the encoded block is equal to 1, it is determined that the obtained dequantized coefficient matrix needs to be inverse-transformed through the DCT for the encoded block. Details are as shown in following Table 1.

Table 1

| Explicit index identifier | Implicitly derived index value | Transform mode | Inverse rearrangement |
|---|---|---|---|
| 1 | - | DCT2 | No |
| 0 | 0 | TS | No |
| | 1 | TS | Yes |

In Table 1, the explicit index identifier equal to "1" and the implicitly derived index being "-" represents a following case. When the explicit index identifier is equal to 1, the transform mode is DCT2 regardless of the value of the implicitly derived index, and the inverse rearrangement processing is not required. In such case, the coding side does not need to adjust the quantized coefficient block for implicit signaling, and decoding side does not need to derive an index implicitly. In Table 1, "TS" represents a mode of transform skipping, that is, the transform is skipped during encoding, the inverse transform needs to be skipped during decoding.

In an embodiment, performing the statistics on the quantized coefficients in the quantized coefficient block to obtain the implicitly derived index value may be a following process. Quantized coefficients within a designated region in the quantized coefficient block are counted to obtain the result of statistics on the quantized coefficients, and then the value of the implicitly derived index is determined according to parity of the result. Herein the value of the implicitly derived index is determined based on the parity of the result of statistics. For example, the result of statistics being an odd number may indicate that the implicitly derived index is equal to 1, and the result of statistics being an even number may indicate that the implicitly derived index is equal to 0. It is appreciated that alternatively, the result of statistics being an odd number may indicate that the implicitly derived index is equal to 0, and the result of statistics being an even number may indicate that the implicitly derived index value is equal to 1.

In an embodiment, performing the statistics on the quantized coefficients in the quantized coefficient block to obtain the implicitly derived index value may be a following process. Quantized coefficients within a designated region in the quantized coefficient block are counted to obtain the result of statistics on the quantized coefficients, then a remainder of the result with respect to a set value is calculated, and the value of the implicitly derived index is determined according to the remainder. Herein the value of the implicitly derived index is determined based on the remainder of the result of statistics with respect to the set value, and there may be more than two candidate values of the implicitly derived index. As an example, the set value may be 3, and the remainder of the result of statistics with respect to 3 may be 0, 1 and 2. Each remainder may correspond to a value of the implicitly derived index, for example, the remainder may serve as the value of the implicitly derived index directly.

In an embodiment, the inverse rearrangement may be rotation, or may be rotation and rearrangement of a part of coefficients. Therefore, processing the dequantized coefficient matrix through the inverse rearrangement may be rotating the dequantized coefficient matrix, or may be rotating the dequantized coefficient matrix and rearranging a part of coefficients in the dequantized coefficient matrix.

In an embodiment, rotating the dequantized coefficient matrix may be rotating a whole region or a partial region of the dequantized coefficient matrix, may be flipping a whole region or a partial region of the dequantized coefficient matrix, or may be rotating a whole region or a partial region of the dequantized coefficient matrix and flipping the whole region or the partial region of the dequantized coefficient matrix.

In an embodiment, rotating the whole region or the partial region of the dequantized coefficient matrix includes a following step. The whole region or the partial region of the dequantized coefficient matrix is rotated in a direction by $n \times 90°$, where n is a non-negative integer (for example, n may be 0, 1, 2, 3, 4, etc.). The direction may be clockwise, counterclockwise direction, or the like.

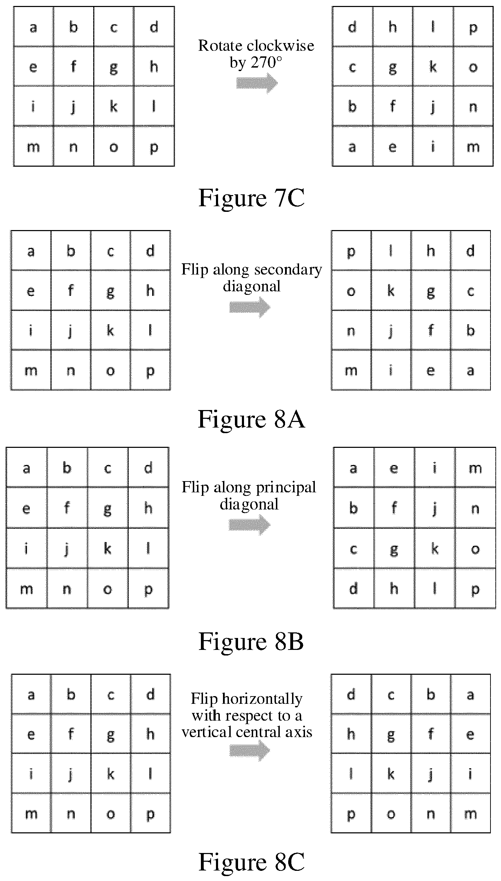

For example, the whole region of the dequantized coefficient matrix may be rotated clockwise by 90° as shown in Figure 7A, may be rotated clockwise by 180° as shown in Figure 7B, or may be rotated clockwise by 270° as shown in Figure 7C.

In an embodiment, flipping the whole region or the partial region of the dequantized coefficient matrix includes at least one of the following steps. The whole region or the partial region the dequantized coefficient matrix is flipped along a principal diagonal. The whole region or the partial region the dequantized coefficient matrix is flipped along a secondary diagonal. The whole region or the partial region the dequantized coefficient matrix is flipped horizontally. The whole region or the partial region the dequantized coefficient matrix is flipped vertically.

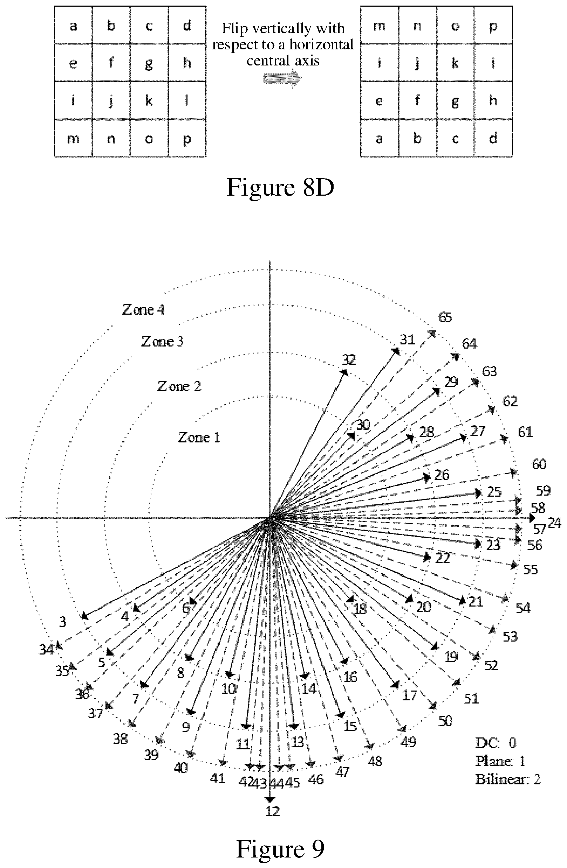

For example, the whole region or the partial region the dequantized coefficient matrix may be flipped along the secondary diagonal as shown in Figure 8A, may be flipped along the principal diagonal as shown in Figure 8B, may be flipped horizontally with respect to a vertical central axis as shown in Figure 8C, or may be flipped vertically with respect to a horizontal central axis as shown in Figure 8D.

In an embodiment, a mode of flipping the dequantized coefficient matrix may be determined according to a relationship between a width and a height of the dequantized coefficient matrix. The dequantized coefficient matrix is flipped based on the determined mode.

For example, the dequantized coefficient matrix is determined to be flipped along the principal diagonal or the secondary diagonal of the dequantized coefficient matrix, e.g., as embodiments shown in Figures 8A and 8B, in a case the width and the height of the dequantized coefficient matrix are equal. It is appreciate that when the width and the height of the dequantized coefficient matrix are equal, the vertical flipping or the horizontal flipping may also be applicable. Alternatively, at least two of vertical flipping, the horizontal flipping, the principal-diagonal flipping and the secondary-diagonal flipping may be applied.

In a case that the width is greater than the height of the dequantized coefficient matrix, the dequantized coefficient matrix is determined to be flipped horizontally, as an embodiment shown in Figure 8C. In a case that the width is smaller than the height of the dequantized coefficient matrix, the dequantized coefficient matrix is determined to be flipped vertically, as an embodiment shown in Figure 8D.

In an embodiment, a mode of flipping the dequantized coefficient matrix may be determined according to a mode of intra prediction applied to the encoded block. The whole region or the partial region of the dequantized coefficient matrix is flipped based on the determined mode.

When the encoded block applies the mode of the intra prediction which points bottom left, the dequantized coefficient matrix is determined to be flipped vertically. When the encoded block applies the mode of the intra prediction which points upper right, the dequantized coefficient matrix is determined to be flipped horizontally.

In an embodiment as shown in Figure 9, the modes of the intra prediction pointing bottom left may refer to modes 3 to 11 and 34 to 43, and the modes of the intra prediction pointing upper right may refer to modes 25 to 32 and 58 to 65.

In an embodiment, the mode of flipping the dequantized coefficient matrix is determined according to the relationship between the width and height of the dequantized coefficient matrix, in a case that the mode of the intra prediction applied by the encoded block is a mode of intra prediction pointing neither bottom left nor upper right. As shown in Figure 9, such modes may refer to modes 0 to 2, 12 to 24, and 44 to 57. Mode 0 represents a DC prediction mode, mode 1 represents a Plane prediction mode, and mode 2 represents a Bilinear prediction mode. How to determine the mode of flipping the dequantized coefficient matrix according to the relationship between the width and height of the dequantized coefficient matrix may refer to the foregoing embodiments, and are not repeated herein.

In an embodiment, there is no strict order between rotating the dequantized coefficient matrix and rearranging the part of the coefficients in the dequantized coefficient matrix. The rotation may be performed before, after, or simultaneously with the rearrangement. The rearrangement may refer to rearranging at least two coefficients in the dequantized coefficient matrix, for example, swapping two coefficients in position, or rearranging multiple coefficients in a random manner.

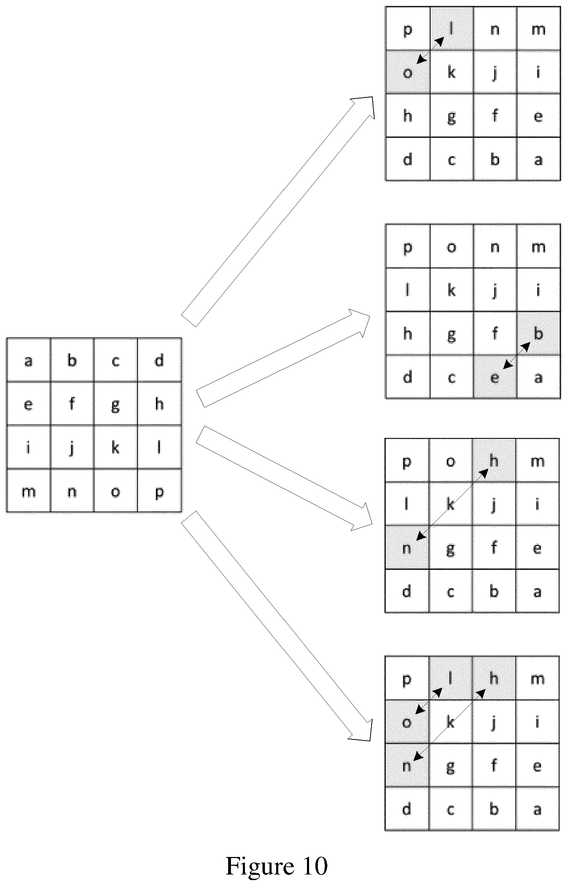

For example, in an embodiment as shown in Figure 10, the whole region of the dequantized coefficient matrix is rotated by 180°, and then the coefficients in a shaded portion of the dequantized coefficient matrix are swapped based on a rearrangement mode indicated by arrow(s) to obtain the processed coefficient matrix. Herein the whole region of the dequantized coefficient matrix is rotated and a part of the coefficients are rearranged.

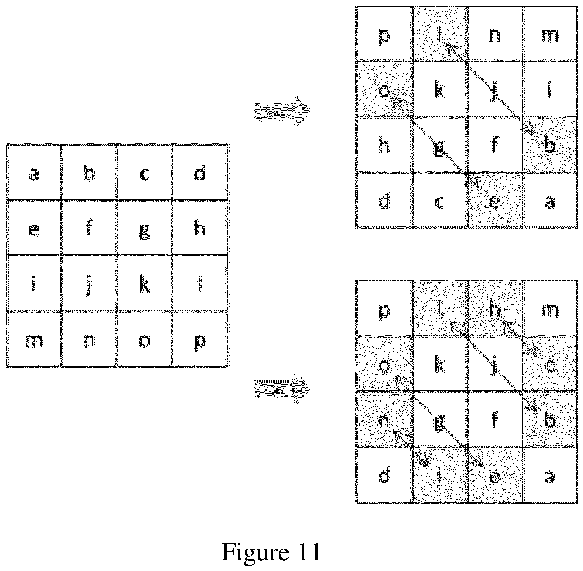

For example, in another embodiment as shown in Figure 11, the partial region (a region other than the shaded portion in Figure 11) of the dequantized coefficient matrix is rotated by 180°, and then the coefficients in a shaded portion of the dequantized coefficient matrix are swapped based on a rearrangement mode indicated by arrows to obtain the processed coefficient matrix. Herein the partial region of the dequantized coefficient matrix is rotated and a part of the coefficients are rearranged.

In S640, the residual is generated according to the processed coefficient matrix.

In an embodiment, the processed coefficient matrix may serve as the reconstructed residual, or may be subject to another processing to obtain the residual. Specifically, the encoding side transforms, or skips transform, on the residual, process the coefficient matrix through rearrangement, and then quantizes and entropy-codes that processed coefficient matrix. After acquiring the encoded block, the decoding side entropy-decodes and dequantizes the encoded block, processes the coefficient matrix through inverse rearrangement (which is an inverse process of the rearrangement at the encoding side), and then inverse-transforms or skips inverse transform skipping on the processed coefficient matrix to obtain the reconstructed residual.

According to embodiments of the present disclosure, the dequantized coefficient matrix can be processed through the inverse rearrangement. The non-zero coefficients in the dequantized coefficient matrix are more concentrated in left, upper, and upper-left regions of the coefficient matrix, and hence an area of the SRCC region is reduced in the coding. Thereby, the video coding is more efficient.

Hereinafter described are apparatus embodiments of the present disclosure, in which apparatuses may be configured to perform the method for video decoding in the foregoing embodiments. Details not disclosed in the apparatus embodiments may refer to the foregoing method embodiments.

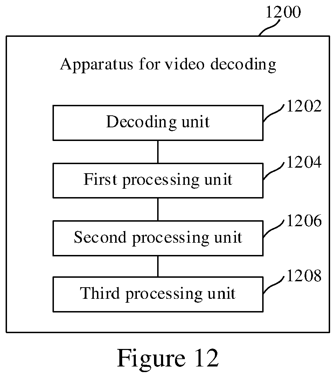

Figure 12 shows a block diagram of an apparatus for video decoding according to an embodiment of the present disclosure. The apparatus may be deployed in a device having a function of computing and processing, such as a terminal device or a server.

Reference is made to Figure 12. An apparatus 1200 for video decoding is provided according to an embodiment of the present disclosure, comprising a decoding unit 1202, a first processing unit 1204, a second processing unit 1206, and a third processing unit 1208.

The decoding unit 1202 is configured to configured to entropy-decode an encoded block of a video frame to obtain a quantized coefficient block for a residual corresponding to the encoded block. The first processing unit 1204 is configured to dequantize the quantized coefficient block to obtain a dequantized coefficient matrix. The second processing unit 1206 is configured to process the dequantized coefficient matrix through inverse rearrangement to obtain processed coefficient matrix, where non-zero coefficients in the processed coefficient matrix are concentrated in left, upper and upper-left regions of the coefficient matrix. The third processing unit 1208 is configured to generate the residual according to the processed coefficient matrix.

In some embodiments based on the foregoing solution, the second processing unit 1206 processes the dequantized coefficient matrix through the rearrangement comprises: rotating the dequantized coefficient matrix, or rotating the dequantized coefficient matrix and rearranging a part of coefficients in the dequantized coefficient matrix.

In some embodiments based on the foregoing solution, the second processing unit 1206 rotating the dequantized coefficient matrix comprises at least one of: rotating a whole region or a partial region of the dequantized coefficient matrix; or flipping a whole region or a partial region of the dequantized coefficient matrix.

In some embodiments based on the foregoing solution, the second processing unit 1206 rotating the whole region or the partial region of the dequantized coefficient matrix comprises: rotating the whole region or the partial region of the dequantized coefficient matrix in a direction by a non-negative-integer multiple of 90°.

In some embodiments based on the foregoing solution, the second processing unit 1206 flipping the whole region or the partial region of the dequantized coefficient matrix comprises at least one of: flipping the whole region or the partial region of the dequantized coefficient matrix along a principal diagonal, flipping the whole region or the partial region of the dequantized coefficient matrix along a secondary diagonal, flipping the whole region or the partial region of the dequantized coefficient matrix horizontally, or flipping the whole region or the partial region of the dequantized coefficient matrix vertically.

In some embodiments based on the foregoing solution, the second processing unit 1206 flipping the whole region or the partial region of the dequantized coefficient matrix comprises: determining a mode of flipping the dequantized coefficient matrix according to an intra-prediction mode applied to the encoded block; and flipping the whole region or the partial region of the dequantized coefficient matrix based on the mode.

In some embodiments based on the foregoing solution, the second processing unit 1206 is configured to: determine the dequantized coefficient matrix to be flipped vertically in a case that the intra-prediction mode applied to the encoded block point bottom left; determine the dequantized coefficient matrix to be flipped horizontally in a case that the intra-prediction mode applied to the encoded block points upper right; determine the mode of flipping the dequantized coefficient matrix according to a relationship between a width and a height of the dequantized coefficient matrix, in a case that the intra-prediction mode applied to the encoded block points neither bottom left nor upper right.

In some embodiments based on the foregoing solution, the second processing unit 1206 is configured to rotate the dequantized coefficient matrix and rearrange at least two coefficients.

In some embodiments based on the foregoing solution, the second processing unit 1206 is configured to determine whether the dequantized coefficient matrix obtained for the corresponding encoded block needs to be processed through the inverse rearrangement according to at least one of: a value of an index identifier in a sequence header of the encoded block which corresponds to a video frame sequence; a value of an index identifier in an image header of the encoded block which corresponds to a video frame; a coding mode applied to the encoded block; a dimension of the encoded block; a value of an index identifier in the encoded block; or implicit signaling of a result of statistics on coefficients in the quantized coefficient block.

In some embodiments based on the foregoing solution, the second processing unit 1206 is configured to: determine that the dequantized coefficient matrix of a target encoded block needs to be processed through the inverse rearrangement, in a case that the result of statistics on the coefficients in the quantized coefficient block corresponding to the target encoded block is a first value, where the index identifier in the sequence header of encoding blocks corresponding to a video frame sequence and the index identifier in the image header of encoding blocks corresponding to an image frame in the video frame sequence have designated values, the coding mode applied to the target encoded block which is among encoded blocks corresponding to the video frame is an intra-prediction mode, and the dimension of the target encoded block is smaller than a set dimension.

In some embodiments based on the foregoing solution, the second processing unit 1206 is configured to: determine that the dequantized coefficient matrix of a target encoded block needs to be inverse-transformed through discrete cosine transform (DCT), in a case that the result of statistics on the coefficients in the quantized coefficient block corresponding to the target encoded block is a second value, where the index identifier in the sequence header of encoding blocks corresponding to a video frame sequence and the index identifier in the image header of encoding blocks corresponding to an image frame in the video frame sequence have designated values, the coding mode applied to the target encoded block which is among encoded blocks corresponding to the video frame is an intra-prediction mode, and the dimension of the target encoded block is smaller than a set dimension.

In some embodiments based on the foregoing solution, whether the dequantized coefficient matrix obtained for the corresponding encoded block needs to be processed throuth the inverse rearrangement is determined according to at least the implicit signaling of the result of statics coefficient statistical result in the quantized coefficient block, the second processing unit 1206 is further configured to: count non-zero coefficients, even coefficients, non-zero even coefficients, or odd coefficients within a designated region in the quantized coefficient block to obtain a quantity, and determine parity of the quantity as the result of statistics on the coefficients in the quantized coefficient block, where the designated region comprises a whole region of the quantized coefficient block or an SRCC region in the quantized coefficient block.

In some embodiments based on the foregoing solution, the second processing unit 1206 is further configured to: perform statistics on quantized coefficients in the quantized coefficient block to obtain a value of an implicitly derived index; and determine whether the encoded block needs to skip inverse transform or the obtained dequantized coefficient matrix needs to be processed through the inverse rearrangement according to the value of the implicitly derived index and a value of an explicit index identifier in the encoded block.

In some embodiments based on the foregoing solution, the second processing unit 1206 is further configured to: determine that the encoded block needs to the skip inverse transform and the dequantized coefficient matrix corresponding to the encoded block needs to be processed through the inverse rearrangement in a case that the explicit index identifier has a first value and the implicitly derived index has the first value; determine that the encoded block needs to skip the inverse transform and the dequantized coefficient matrix corresponding to the encoded block does not need to be processed through the inverse rearrangement in a case that the explicit index identifier has the first value and the implicitly derived index has a second value; and determine that the obtained dequantized coefficient matrix corresponding to the encoded block needs to be inverse-transformed through DCT in a case that the explicit index identifier in the encoded block has the second value.

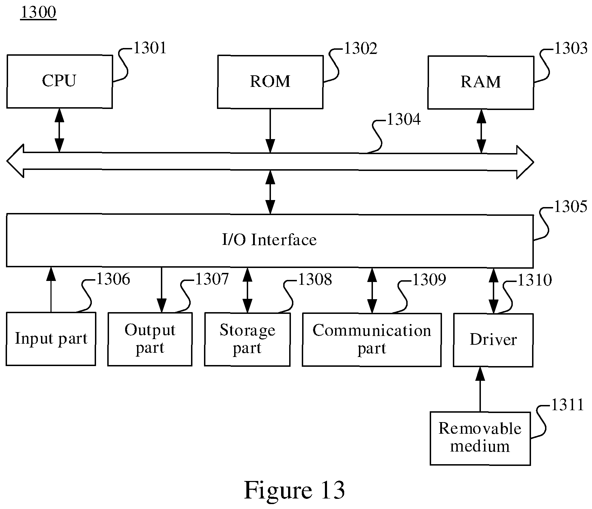

Figure 13 is a schematic structural diagram of a computer system of an electronic device suitable for implementing embodiments of the present disclosure.

The computer system 1300 of the electronic device as shown in Figure 13 is merely an example, and does not constitute any limitation on functions or applications of embodiments of the present disclosure.

As shown in Figure 13, the computer system 1300 includes a central processing unit (CPU) 1301 capable to perform various appropriate actions and processing, for example, perform the method according foregoing embodiments, according to a program stored in a read-only memory (ROM) 1302 or a program loaded into a random-access memory (RAM) 1303 from a storage component 1308. The RAM 1303 further stores various programs and data required for system operations. The CPU 1301, the ROM 1302, and the RAM 1303 are connected to each other via a bus 1304. An input/output (I/O) interface 1305 is coupled to the bus 1304.

Components connected to the I/O interface 1305 includes: an input component 1306, including a keyboard, a mouse, or the like; an output component 1307, including a cathode ray tube (CRT), a liquid crystal display (LCD), a speaker, and the like; the storage component1308, including a hard disk or the like; and a communication component 1309, including a network interface card such as an LAN card or a modem. The communication component 1309 performs communication via a network such as the Internet. A driver 1310 is further coupled to the I/O interface 1305 on requirements. A removable medium 1311, such as a magnetic disk, an optical disc, a magneto-optical disk, or a semiconductor memory, is installed on the drive 1310 on requirement, so that a computer program read from the removable medium can be installed on the storage component 1308 on requirement.

Particularly, according to an embodiment of the present disclosure, the foregoing processes described with reference to the flowcharts may be implemented as computer software programs. A computer program product is provided according to an embodiment of the present disclosure. The computer program product includes a computer program stored in a computer-readable medium. The computer program includes program codes for performing the method as shown in the flowcharts. In such embodiment, the computer program may be downloaded and installed from the network via the communication portion 1309, and/or installed from the removable medium 1311. When the computer program is executed by the CPU 1301, various functions defined in the method and the apparatus according to embodiments of the present disclosure are implemented.

The computer-readable medium according to embodiments the present disclosure may be a computer-readable signal medium, a computer-readable storage medium, or any combination of the two. For example, the computer-readable storage medium may be, but is not limited to, an electric/magnetic/optical/electromagnetic/infrared/semiconductor system/apparatus/component, or any combination of the above forms. A more specific example of the computer-readable storage medium may include, but is not limited to, an electrical connection having one or more wires, a portable computer magnetic disk, a hard disk, a random-access memory (RAM), a read-only memory (ROM), an erasable programmable read-only memory (EPROM or a flash memory), an optical fiber, a compact disk read-only memory (CD-ROM), an optical storage device, a magnetic storage device, or any appropriate combination of the above forms. Herein the computer-readable storage medium may be any tangible medium containing or storing a program, and the program may be used by, or in combination with, an instruction executing system/apparatus/device. Herein the computer-readable signal medium may include a data signal transmitted in a baseband or propagating as a part of a carrier wave, and the data signal carries computer-readable program codes. The propagating data signal may be various forms, which include but is not limited to an electromagnetic signal, an optical signal, or any suitable combination of the two. The computer-readable signal medium may be any computer-readable medium other than the computer-readable storage medium. The computer-readable medium may send, carry, or transmit a program, and the program is used by or in combination with an instruction executing system/apparatus/device. The program codes contained in the computer-readable medium may be transmitted via any appropriate medium, which includes but is not limited to: a wireless medium, a wire, an optical cable, radio frequency, any suitable combination of the above forms, or the like.

The flowcharts and block diagrams in the drawings illustrate feasible system architecture, functions, and operations that may be implemented by a system, a method, and a computer program product according to various embodiments of the present disclosure. In this regard, each box in a flowchart or a block diagram may represent a module, a program segment, or a part of codes. The module, the program segment, or the part of codes includes one or more executable instructions configured to implement a designated logic function. In some alternative embodiments, functions as annotations in the boxes may be implemented in a sequence different from that as shown in the drawings. For example, in practice, two boxes shown in succession may be performed substantially simultaneously, and sometimes may be performed in a reverse sequence, which is determined by related functions. Each block/box and a combination of block/boxes in a block diagram and/or a flowchart may be implemented through a dedicated hardware-based system, which is configured to achieve a specified function or operation, or may be implemented through a combination of dedicated hardware and computer instructions.

A unit described herein may be implemented in software manner or hardware, and may be provided in a processor. Names of the units do not constitute a limitation on the units in some cases.

In another aspect, a computer readable medium is further provided according to embodiments of the present disclosure. The computer readable medium may be comprised in the electronic device described in the forgoing embodiments, or may exist independently without being assembled into an electronic device. The computer-readable medium carries one or more programs, and the one or more programs when executed by the electronic device configure the electronic device to implement the method described in the foregoing embodiments.

Although multiple modules or units of a device configured to perform operations are discussed in the foregoing detailed description, such division is not mandatory. In practice, the features and functions of two or more modules or units as described above may be specifically implemented in one module or unit in some embodiments, and similarly features and functions of one module or unit as described above may be further divided into multiple modules or units in some embodiments.

Description of the foregoing embodiments facilitates those skilled in the art would easily understanding that the exemplary implementations described herein may be implemented through software, or software in combination with necessary hardware. Therefore, technical solutions in embodiments of the present disclosure may be implemented as a software product. The software product may be stored in a non-volatile storage medium (which may be a CD-ROM, a USB flash drive, a removable hard disk, or the like) or in the network, comprise several instructions for instructing a computing device (which may be a personal computer, a server, a touch terminal, a network device, or the like) to perform the method according to the foregoing embodiments of the present disclosure.

Those skilled in the art that read the specification and practice the disclosed implementations would easily reach other implementations of the present disclosure. The present disclosure is intended to cover any variation, use, or adaptive change thereof. These variations, uses, or adaptive changes follow a general principle of the present disclosure and comprise common general knowledge or common technical means in the art which are not disclosed herein. The specification and embodiments are merely exemplary, and the scope and spirit of the present disclosure is indicated by appended claims.

The present disclosure is not limited to precise structures as described above and as shown in the drawings. Various modifications and changes can be made without departing from the scope of the present disclosure. The scope of the present disclosure is only limited by the appended claims.

**Claims**

1. A method for video decoding, executable by a device having a function of computing and processing, wherein the method comprises:

entropy-decoding an encoded block of a video frame to obtain a quantized coefficient block for a residual corresponding to the encoded block;

dequantizing the quantized coefficient block to obtain a dequantized coefficient matrix;

processing the dequantized coefficient matrix through inverse rearrangement to obtain processed coefficient matrix, wherein non-zero coefficients in the processed coefficient matrix are concentrated in left, upper and upper-left regions of the coefficient matrix; and

generating the residual according to the processed coefficient matrix.

2. The method according to claim 1, wherein processing the dequantized coefficient matrix through inverse rearrangement comprises:

rotating the dequantized coefficient matrix; or
rotating the dequantized coefficient matrix and rearranging a part of coefficients in the dequantized coefficient matrix.

3. The method according to claim 2, wherein rotating the dequantized coefficient matrix comprises at least one of:

rotating a whole region or a partial region of the dequantized coefficient matrix; or
flipping a whole region or a partial region of the dequantized coefficient matrix.

4. The method according to claim 3, wherein rotating the whole region or the partial region of the dequantized coefficient matrix comprises:
rotating the whole region or the partial region of the dequantized coefficient matrix in a direction by a non-negative-integer multiple of 90°.

5. The method according to claim 3, wherein flipping the whole region or the partial region of the dequantized coefficient matrix comprises at least one of:

flipping the whole region or the partial region of the dequantized coefficient matrix along a principal diagonal;
flipping the whole region or the partial region of the dequantized coefficient matrix along a secondary diagonal;
flipping the whole region or the partial region of the dequantized coefficient matrix horizontally; or
flipping the whole region or the partial region of the dequantized coefficient matrix vertically.

6. The method for video decoding according to claim 3, wherein flipping the whole region or the partial region of the dequantized coefficient matrix comprises:

determining, according to an intra-prediction mode applied to the encoded block, a mode of flipping the dequantized coefficient matrix; and
flipping the whole region or the partial region of the dequantized coefficient matrix based on the mode.

7. The method according to claim 6, wherein determining, according to the intra-prediction mode applied to the encoded block, the mode of flipping the dequantized coefficient matrix comprises:

determining the dequantized coefficient matrix to be flipped vertically, in a case that the intra-prediction mode applied to the encoded block point bottom left;
determining the dequantized coefficient matrix to be flipped horizontally, in a case that the intra-prediction mode applied to the encoded block points upper right; and
determining, according to a relationship between a width and a height of the dequantized coefficient matrix, the mode of flipping the dequantized coefficient matrix, in a case that the intra-prediction mode applied to the encoded block points neither bottom left nor upper right.

8. The method according to claim 2, wherein rotating the dequantized coefficient matrix and rearranging the part of coefficients in the dequantized coefficient matrix comprises:
rotating the dequantized coefficient matrix and rearranging at least two coefficients.

9. The method according to claim 1, further comprising:
determining whether the dequantized coefficient matrix obtained for the corresponding encoded block needs to be processed through the inverse rearrangement according to at least one of:

a value of an index identifier in a sequence header of the encoded block which corresponds to a video frame sequence;

a value of an index identifier in an image header of the encoded block which corresponds to a video frame;

a coding mode applied to the encoded block;

a dimension of the encoded block;

a value of an index identifier in the encoded block; or

implicit signaling of a result of statistics on coefficients in the quantized coefficient block.

**10.** The method for video decoding according to claim 9, wherein:

whether the dequantized coefficient matrix needs to be processed through the inverse rearrangement is determined according to the value of the index identifier in the sequence header, the value of the index identifier in the image header, the coding mode applied to the encoded block, the dimension of the encoded block, and the implicit signaling of the result of statistics; and

the method further comprises:

determining that the dequantized coefficient matrix of a target encoded block needs to be processed through the inverse rearrangement, in a case that the result of statistics on the coefficients in the quantized coefficient block corresponding to the target encoded block is a first value;

wherein the index identifier in the sequence header of encoding blocks corresponding to a video frame sequence and the index identifier in the image header of encoding blocks corresponding to an image frame in the video frame sequence have designated values, the coding mode applied to the target encoded block which is among encoded blocks corresponding to the video frame is an intra-prediction mode, and the dimension of the target encoded block is smaller than a set dimension.

**11.** The method according to claim 10, further comprising:

determining that the dequantized coefficient matrix of a target encoded block needs to be inverse-transformed through discrete cosine transform, DCT, in a case that the result of statistics on the coefficients in the quantized coefficient block corresponding to the target encoded block is a second value;

wherein the index identifier in the sequence header of encoding blocks corresponding to a video frame sequence and the index identifier in the image header of encoding blocks corresponding to an image frame in the video frame sequence have designated values, the coding mode applied to the target encoded block which is among encoded blocks corresponding to the video frame is an intra-prediction mode, and the dimension of the target encoded block is smaller than a set dimension.

**12.** The method according to claim 9, wherein:

whether the dequantized coefficient matrix obtained for the corresponding encoded block needs to be processed throuth the inverse rearrangement is determined according to at least the implicit signaling of the result of statics coefficient statistical result in the quantized coefficient block, and

the method further comprises:

counting non-zero coefficients, even coefficients, non-zero even coefficients, or odd coefficients within a designated region in the quantized coefficient block to obtain a quantity; and

determining parity of the quantity as the result of statistics on the coefficients in the quantized coefficient block, wherein the designated region comprises a whole region of the quantized coefficient block or an SRCC region in the quantized coefficient block.

**13.** The method for video decoding according to claim 1, further comprising:

performing statistics on quantized coefficients in the quantized coefficient block to obtain a value of an implicitly derived index; and

determining, according to the value of the implicitly derived index and a value of an explicit index identifier in the encoded block, whether the encoded block needs to skip inverse transform or the obtained dequantized coefficient matrix needs to be processed through the inverse rearrangement.

**14.** The method for video decoding according to claim 13, wherein determining, according to the value of the implicitly derived index and the value of the explicit index identifier in the encoded block, whether the encoded block needs to skip inverse transform or the obtained dequantized coefficient matrix needs to be processed through the inverse rearrangement comprises:

determining that the encoded block needs to the skip inverse transform and the dequantized coefficient matrix corresponding to the encoded block needs to be processed through the inverse rearrangement, in a case that the explicit index identifier has a first value and the implicitly derived index has the first value;

determining that the encoded block needs to skip the inverse transform and the dequantized coefficient matrix corresponding to the encoded block does not need to be processed through the inverse rearrangement, in a case that the explicit index identifier has the first value and the implicitly derived index has a second value; and

determining that the obtained dequantized coefficient matrix corresponding to the encoded block needs to be inverse-transformed through DCT, in a case that the explicit index identifier in the encoded block has the second value.

15. A method for video encoding, executable by a device having a function of computing and processing, wherein the method comprises:

calculating a difference between an original image signal and a predicted image signal which correspond to an encoded block to obtain a residual corresponding to the encoded block;

obtaining a to-be-quantized coefficient matrix corresponding to the residual according to the residual;

processing the to-be-quantized coefficient matrix through rearrangement to obtain a processed coefficient matrix, wherein non-zero coefficients in the processed coefficient matrix are concentrated in left, upper and upper-left regions of the coefficient matrix;

quantizing the processed coefficient matrix to obtain a quantized coefficient block of the residual; and

entropy-coding quantized coefficients in the quantized coefficient block to obtain an encoded video bitstream.

16. An apparatus for video decoding, deployed at a device having a function of computing and processing, wherein the apparatus comprises:

a decoding unit, configured to entropy-decode an encoded block of a video frame to obtain a quantized coefficient block for a residual corresponding to the encoded block;

a first processing unit, configured to dequantize the quantized coefficient block to obtain a dequantized coefficient matrix;

a second processing unit, configured to process the dequantized coefficient matrix through inverse rearrangement to obtain processed coefficient matrix, wherein non-zero coefficients in the processed coefficient matrix are concentrated in left, upper and upper-left regions of the coefficient matrix; and

a second processing unit, configured to generate the residual according to the processed coefficient matrix.

17. A apparatus for video encoding, deployed at a device having a function of computing and processing, wherein the apparatus comprises:

a first processing unit, configured to calculating a difference between an original image signal and a predicted image signal which correspond to an encoded block to obtain a residual corresponding to the encoded block;

a second processing unit, configured to obtain a to-be-quantized coefficient matrix corresponding to the residual according to the residual;

a third processing unit, configured to process the to-be-quantized coefficient matrix through rearrangement to obtain a processed coefficient matrix, wherein non-zero coefficients in the processed coefficient matrix are concentrated in left, upper and upper-left regions of the coefficient matrix;

a third processing unit, configured to quantize the processed coefficient matrix to obtain a quantized coefficient block of the residual; and

a encoding unit, configured to entropy-code quantized coefficients in the quantized coefficient block to obtain an encoded video bitstream.

18. An electronic device, comprising:

one or more processors; and

a storage apparatus, configured to store one or more programs, wherein the one or more programs when executed by the one or more processors cause the one or more processors to implement the method according to any one of claims 1 to 14, or the method according to claim 15.

19. A computer-readable medium, configured to store a computer program, wherein the computer program when executed by a processor implements the method according to any one of claims 1 to 14, or the method according to claim 15.

20. A computer program product, wherein the computer program product when executed is configured to implement the method according to any one of claims 1 to 14, or the method according to claim 15.

Figure 1

Figure 2

Figure 3

SRx

SRy

Scan region

## Figure 4

SRx

SRy

(SRx, SRy)

## Figure 5

| | S610 |
|---|---|
| Entropy-decode an encoded block of a video frame to obtain a quantized coefficient block for a residual corresponding to the encoded block | |

↓

| | S620 |
|---|---|
| Dequantize the quantized coefficient block to obtain a dequantized coefficient matrix | |

↓

| | S630 |
|---|---|
| Process the dequantized coefficient matrix through inverse rearrangement to obtain processed coefficient matrix | |

↓

| | S640 |
|---|---|
| Generate the residual according to the processed coefficient matrix | |

## Figure 6

| a | b | c | d |
|---|---|---|---|
| e | f | g | h |
| i | j | k | l |
| m | n | o | p |

Rotate clockwise by 90°  ⇒

| m | i | e | a |
|---|---|---|---|
| n | j | f | b |
| o | k | g | c |
| p | l | h | d |

## Figure 7A

| a | b | c | d |
|---|---|---|---|
| e | f | g | h |
| i | j | k | l |
| m | n | o | p |

Rotate clockwise by 180°  ⇒

| p | o | n | m |
|---|---|---|---|
| l | k | j | i |
| h | g | f | e |
| d | c | b | a |

## Figure 7B

| a | b | c | d |
|---|---|---|---|
| e | f | g | h |
| i | j | k | l |
| m | n | o | p |

Rotate clockwise
by 270°

| d | h | l | p |
|---|---|---|---|
| c | g | k | o |
| b | f | j | n |
| a | e | i | m |

## Figure 7C

| a | b | c | d |
|---|---|---|---|
| e | f | g | h |
| i | j | k | l |
| m | n | o | p |

Flip along secondary
diagonal

| p | l | h | d |
|---|---|---|---|
| o | k | g | c |
| n | j | f | b |
| m | i | e | a |

## Figure 8A

| a | b | c | d |
|---|---|---|---|
| e | f | g | h |
| i | j | k | l |
| m | n | o | p |

Flip along principal
diagonal

| a | e | i | m |
|---|---|---|---|
| b | f | j | n |
| c | g | k | o |
| d | h | l | p |

## Figure 8B

| a | b | c | d |
|---|---|---|---|
| e | f | g | h |
| i | j | k | l |
| m | n | o | p |

Flip horizontally
with respect to a
vertical central axis

| d | c | b | a |
|---|---|---|---|
| h | g | f | e |
| l | k | j | i |
| p | o | n | m |

## Figure 8C

| a | b | c | d |
|---|---|---|---|
| e | f | g | h |
| i | j | k | l |
| m | n | o | p |

Flip vertically with respect to a horizontal central axis ⇨

| m | n | o | p |
|---|---|---|---|
| i | j | k | i |
| e | f | g | h |
| a | b | c | d |

## Figure 8D

DC: 0
Plane: 1
Bilinear: 2

## Figure 9

Figure 10

Figure 11

1200

Apparatus for video decoding

| Decoding unit | 1202 |

| First processing unit | 1204 |

| Second processing unit | 1206 |

| Third processing unit | 1208 |

Figure 12

Figure 13

## INTERNATIONAL SEARCH REPORT

| International application No. |
| --- |
| **PCT/CN2021/130206** |

| A. | CLASSIFICATION OF SUBJECT MATTER |
| --- | --- |
| | H04N 19/88(2014.01)i; H04N 19/176(2014.01)i |

According to International Patent Classification (IPC) or to both national classification and IPC

| B. | FIELDS SEARCHED |
| --- | --- |

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; WPABSC; WPABS; ENTXT; DWPI; ENTXTC; CNKI; IEEE; JVET; JCTVC: 变换, 翻转, 左, 非零, 转动, 旋转, 左上, 量化 翻转, 重排, 跳过, 系数, transform, skip, degrees rotates, rotate, coefficient, left, change

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105165012 A (QUALCOMM INC.) 16 December 2015 (2015-12-16) description paragraphs [0071]-[0204] | 1-20 |
| X | CN 104471935 A (QUALCOMM INC.) 25 March 2015 (2015-03-25) description paragraphs [0069]-[0179] | 1-20 |
| X | US 2013128966 A1 (FUTUREWEI TECHNOLOGIES INC. et al.) 23 May 2013 (2013-05-23) 1-20 | 1-20 |
| X | Rajitha Weerakkody et al. "Mirroring of Coefficients for Transform Skipping" *Joint Collaborative Team on Video Coding(JCT-VC) of ITU-T SG 16 WP 3 and ISO/ IEC JTC 1/SC 29/WG 11, 11th Meeting, Shanghai, CN, 10-19 Oct 2012, JCTVC-K0294,* 29 June 2012 (2012-06-29), full text, sections 1 and 2 | 1-20 |
| A | WO 2018194189 A1 (SAMSUNG ELECTRONICS CO., LTD.) 25 October 2018 (2018-10-25) entire document | 1-20 |
| A | US 2013058407 A1 (SOLE ROJALS JOEL et al.) 07 March 2013 (2013-03-07) entire document | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 January 2022** | **27 January 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/130206**

| Patent document cited in search report | | | Publication date (day/month/year) | Patent family member(s) | | | Publication date (day/month/year) |
|---|---|---|---|---|---|---|---|
| CN | 105165012 | A | 16 December 2015 | KR | 20150143585 | A | 23 December 2015 |
| | | | | ES | 2810253 | T3 | 08 March 2021 |
| | | | | EP | 2989796 | A1 | 02 March 2016 |
| | | | | EP | 2989796 | B1 | 06 May 2020 |
| | | | | BR | 112015026899 | A2 | 25 July 2017 |
| | | | | WO | 2014176362 | A1 | 30 October 2014 |
| | | | | KR | 20180041774 | A | 24 April 2018 |
| | | | | KR | 102013561 | B1 | 23 August 2019 |
| | | | | JP | 2016521070 | A | 14 July 2016 |
| | | | | JP | 6285014 | B2 | 28 February 2018 |
| | | | | HU | E050421 | T2 | 28 December 2020 |
| CN | 104471935 | A | 25 March 2015 | WO | 2014011894 | A1 | 16 January 2014 |
| | | | | US | 2014016698 | A1 | 16 January 2014 |
| | | | | US | 9264713 | B2 | 16 February 2016 |
| US | 2013128966 | A1 | 23 May 2013 | CN | 103959790 | A | 30 July 2014 |
| | | | | WO | 2013071889 | A1 | 23 May 2013 |
| | | | | EP | 2781097 | A1 | 24 September 2014 |
| | | | | EP | 2781097 | A4 | 06 May 2015 |
| | | | | EP | 2781097 | B1 | 10 January 2018 |
| | | | | US | 9344722 | B2 | 17 May 2016 |
| WO | 2018194189 | A1 | 25 October 2018 | US | 2021168401 | A1 | 03 June 2021 |
| | | | | KR | 20190094467 | A | 13 August 2019 |
| | | | | KR | 102264680 | B1 | 14 June 2021 |
| US | 2013058407 | A1 | 07 March 2013 | MX | 2014001422 | A | 21 March 2014 |
| | | | | AU | 2012294683 | A1 | 20 February 2014 |
| | | | | AU | 2012294683 | B2 | 19 November 2015 |
| | | | | IL | 230364 | A | 29 June 2017 |
| | | | | CA | 2844138 | A1 | 14 February 2013 |
| | | | | CA | 2844138 | C | 12 September 2017 |
| | | | | ZA | 201401626 | B | 25 January 2017 |
| | | | | US | 9106913 | B2 | 11 August 2015 |
| | | | | BR | 112014002770 | A2 | 21 February 2017 |
| | | | | CN | 103718554 | A | 09 April 2014 |
| | | | | KR | 20140046046 | A | 17 April 2014 |
| | | | | KR | 101656964 | B1 | 12 September 2016 |
| | | | | WO | 2013022748 | A1 | 14 February 2013 |
| | | | | RU | 2562381 | C1 | 10 September 2015 |
| | | | | EP | 2740269 | A1 | 11 June 2014 |
| | | | | JP | 2014527358 | A | 09 October 2014 |
| | | | | JP | 5951772 | B2 | 13 July 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011286559